# EUROPEAN PATENT APPLICATION

(11) **EP 4 024 876 A1**
(43) Date of publication of application: **06.07.2022**
(21) Application number: 21870555.6
(22) Date of filing: 14.07.2021
(51) Int. Cl.: H04N 21/239, H04N 21/472, H04N 21/845

(54) **VIDEO ACQUISITION METHOD AND TERMINAL**

(30) Priority: 04.11.2020 CN 202011217632
(71) Applicant: Beijing Dajia Internet Information Technology Co., Ltd., Beijing 100085 (CN)
(72) Inventor: SHUAI, Longcheng, Beijing 100085 (CN)
(74) Representative: Yang, Shu
(86) International application number: PCT/CN2021/106169
(87) International publication number: WO 2022/095502

(57) **Abstract**

The present disclosure relates to a method for acquiring videos and a terminal, which relates to the field of streaming media technologies. The method includes: determining a first start position of a target video in response to a video play operation; sending a first download request for downloading first video data, wherein the first video data starts from the first start position and a data volume of the first video data does not exceed a video segment threshold; and storing the first video data as a first video segment.

## Description

This application claims priority to Chinese Patent Application No. 202011217632.5, filed on November 4, 2020 and entitled "METHOD FOR ACQUIRING VIDEOS, AND TERMINAL AND STORAGE MEDIUM THEREOF," the disclosure of which is herein incorporated by reference in its entirety.

### TECHNICAL FIELD

The present disclosure relates to the field of streaming media technologies, and in particular relates to a method for acquiring videos, and a terminal thereof.

### BACKGROUND

Due to capabilities to provide users with rich video resources and convenient viewing experiences, network video services are being applied more and more widely. The network video service is generally practiced over a video playing system that is mainly composed of a video-source library system, a streaming media service system, a video cabinet system, transmitting and switching network, and a user terminal, such as a television (TV) set with a set-top box, a personal computer, or a smartphone. Typically, a video is played by the following processes. In the case that the user terminal sends a video-on-demand request, the streaming media service system retrieves the video resources stored in the video-source library based on on-demand information carried in the video-on-demand request, and transmits the video resources to the user terminal in a video-audio streaming file format over a high-speed transmission network.

### SUMMARY

The present disclosure provides a method for acquiring videos, and a terminal thereof. The technical solutions of the present disclosure are as follows.

According to a first aspect of embodiments of the present disclosure, a method for acquiring videos is provided. The method includes:
determining a first start position of a target video in response to a video play operation;
sending a first download request for downloading first video data, wherein the first video data starts from the first start position, and data volume of the first video data does not exceed a video segment threshold; and
storing the first video data as a first video segment.

According to a second aspect of embodiments of the present disclosure, a terminal is provided. The terminal includes:
a determining module, configured to determine a first start position of a target video in response to a video play operation;
a sending module, configured to send a first download request for downloading first video data, wherein the first video data starts from the first start position, and a data volume of the first video data does not exceed a video segment threshold; and
a storing module, configured to store the first video data as a first video segment.

According to a third aspect of the embodiments of the present disclosure, a terminal is provided. The terminal includes: a processor, and a memory configured to store one or more instructions executable by the processor, wherein the processor, when loading and executing the one or more instructions, is caused to perform the method for acquiring videos as defined in any one of the above aspects.

According to a fourth aspect of embodiments of the present disclosure, a computer-readable storage medium is provided. One or more instructions in the computer-readable storage medium, when loaded and executed by a terminal, cause the terminal to perform the method for acquiring videos as defined in any one of the above aspects.

According to a fifth aspect of embodiments of the present disclosure, a computer program product is provided. The computer program product, when run on a terminal, causes the terminal to perform the method for acquiring videos as defined in any one of the above aspects of the embodiments of the present disclosure.

In the solution according to the present disclosure, a download request is sent, based on a play start position of a target video, for downloading video data, wherein the video data starts from the start position, and a data volume of the video data does not exceed the video segment threshold. Upon the video data being received, a video segment starting from the start position is acquired by storing the video data as the video segment. Therefore, the video data is downloaded from the play start position, such that the network bandwidth and the storage space are saved.

### BRIEF DESCRIPTION OF THE DRAWINGS

The drawings herein are incorporated into the description, constitute a part of the description, show embodiments conforming to the present disclosure, are used to explain the principle of the present disclosure together with the description, and do not constitute any limitation to the present disclosure.
FIG. 1 is a schematic diagram of an architecture of a system for playing videos according to an exemplary embodiment;
FIG. 2 is a flowchart of acquiring videos according to an exemplary embodiment;
FIG. 3 is another flowchart of acquiring videos according to an exemplary embodiment;
FIG. 4 is a schematic structural diagram of a terminal according to an exemplary embodiment;
FIG. 5 is a schematic structural diagram of another terminal according to an exemplary embodiment; and
FIG. 6 is a schematic structural diagram of another terminal according to an exemplary embodiment.

### DETAILED DESCRIPTION

Embodiments of the present disclosure are further illustrated in detail in combination with the accompanying drawings hereinafter.

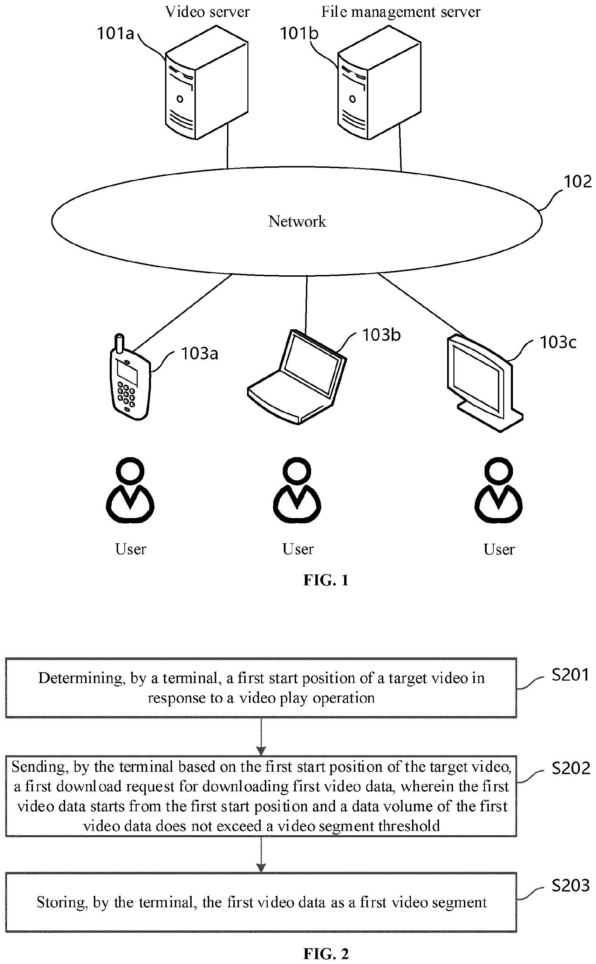

FIG. 1 is an exemplary schematic structural diagram of a video playing system as applicable to embodiments of the present disclosure. As shown in FIG. 1, the video playing system includes servers (101a, 101b), a transmission network 102, and terminals (103a, 103b, 103c).

The server 101a is a video server. The video server mainly consists of a storage device, a cache, and a control management unit, and is mainly configured to compress and store the media data, retrieve media information based on received requests, and then transmit the media information. The video server meets requirements of the video services, such as media data retrieval, real-time transmission of information streams, and encryption and decryption of information. For the interactive video-on-demand, the video server may correspondingly process the real-time request from the terminal, perform access permission control, or implement other functions.

The server 101b is a file management server, which mainly undertakes tasks such as management of user information, billing, organization of video materials, and ensuring security and confidentiality.

The network 102 includes two parts: a backbone network and a local network.

The terminals (103a, 103b, 103c) include smartphones, smart TVs, personal computers, and other user devices with network communication functions and video play functions. The terminals are capable of sending a video play request for playing a target video to the video server.

FIG. 1 exemplarily shows video servers (101a, 101b), and terminals (103a, 103b, 103c), and embodiments of the present disclosure do not limit the number and types of the video server and terminal.

In embodiments of the present disclosure, the terminal, based on the video segment threshold, downloads video data by sending a download request to the video server, each download request being configured to download video data having a data volume not exceeding the video segment threshold. The video segment threshold is set in the terminal by default, or determined by the terminal. For example, the video segment threshold is determined by the terminal based on a video segmentation rule, wherein the video segmentation rule is set in the terminal by default, or the video segment threshold is determined by the terminal. In some embodiments, the video segment threshold is defined by the video segmentation rule. Based on the video segment threshold, one video may be stored on the terminal side as a corresponding number of video segments (in some embodiments, one video segment is stored as one video segment file). The data volume of one video segment does not exceed the video segment threshold. For example, in the case that the video segment threshold is 1Mbyte, the size of one video segment does not exceed 1Mbyte. In some other embodiments, the video segment threshold has other data volumes, which is not limited in embodiments of the present disclosure.

For example, taking the video segment threshold being 1Mbyte as an example, for a video of 5Mbytes, the terminal may store the video of 5Mbytes as five video segments on the terminal side by sending five download requests, each download request being configured to download 1Mbyte of video data (i.e., video data having a data volume not exceeding the video segment threshold). Each of the video segments herein is 1Mbyte in size. In some embodiments, the first download request from the terminal is for downloading video data of the 1^{st} 1Mbyte, and the video data of the 1^{st} 1Mbyte as downloaded is stored as a first video segment file; the second download request from the terminal is for downloading video data of the 2^{nd} 1Mbyte, and the video data of the 2^{nd} 1Mbyte as downloaded is stored as a second video segment file; the third download request from the terminal is for downloading video data of the 3^{rd} 1Mbyte, and the video data of the 3^{rd} 1Mbyte as downloaded is stored as a third video segment file; the fourth download request from the terminal is for downloading video data of the 4^{th} 1Mbyte, and the video data of the 4^{th} 1Mbyte as downloaded is stored as a fourth video segment file; and the fifth download request from the terminal is for downloading video data of the 5^{th} 1Mbyte, and the video data of the 5^{th} 1Mbyte as downloaded is stored as a fifth video segment file. For another example, in some embodiments, for a video of 5.5Mbytes, six download requests are sent to the video server based on the video segment threshold, therefore the video of 5.5Mbytes is stored as six video segment files. The first to fifth video segment files herein correspond to the 1^{st} 1Mbyte to the 5^{th} 1Mbyte, respectively, and the last video segment file corresponds to the remaining 0.5Mbytes.

In some embodiments of the present disclosure, the video segmentation rule or video segment threshold is configured in the terminal by default, and further, the video segmentation rule or video segment threshold configured by default may be known by the video server. In some other embodiments, the video segmentation rule or video segment threshold is set by the terminal. For example, the terminal may provide a video segmentation rule setting interface, allowing the user to set the video segment threshold.

In some other embodiments, the video segmentation rule or video segment threshold is set by the terminal based on the data volume of the video as requested. Optionally, the video segmentation rule or video segment threshold is set by the terminal based on the storage space information of the local storage. Optionally, the video segmentation rule or video segment threshold is set by the terminal based on the data volume of the video as requested and the storage space information of the local storage. For example, the terminal may set a corresponding video segment threshold based on the data volume of the target video as requested, such as a small video segment threshold is set for a target video of a small data volume, and a large video segment threshold is set for a video of a great data volume. For another example, the terminal may set a corresponding video segment threshold based on the space information of the local storage (i.e., the space size of the local storage). For example, a large video segment threshold is set in the case that the local storage space is large, and a small video segment threshold is set in the case that the local storage space is small. In this way, the local storage space may be saved in the case that the user requests to play only part of the video data of the target video.

Referring to FIG. 2, FIG. 2 is a flowchart of a method for acquiring videos according to an exemplary embodiment. As shown in FIG. 2, the method includes the following processes.

In S201, the terminal determines a first start position of a target video in response to a video play operation.

The video play operation is configured to trigger the play of the target video. For example, the video play operation is a user operation for requesting to watch the target video. For example, in some scenarios, the playing of the target video may be triggered in the case that a video resource icon displayed in the application interface of the terminal is triggered (e.g., the user taps on the video resource icon). In some other embodiments, the video play operation is configured to control the play of the video as played during the play process. For example, in some scenarios, in the case that a functional option for controlling the video play progress in the video play interface is triggered (for example, by clicking a fast forward button or dragging a slider on the progress bar), the target video may be triggered to play from a corresponding position or at a corresponding multiplied speed.

Upon acquiring the video play operation against the target video, the terminal may determine the first start position of the target video.

The first start position as determined may be a start position of the target video (e.g., the position of the first frame or the first byte), or may be some other positions. In some embodiments, the terminal acquires the play start position of the target video, and determines the first start position of the target video based on the play start position and the video segment threshold. The play start position is determined based on the video play operation. For example, in the case that the video play operation requests to play the video from the video start position (e.g., the user taps the "play" control button), the play start position is namely the start position of the video. For another example, in the case that the video play operation requests to play the video from a position in the middle of the video (e.g., the user drags the slider on the video play progress bar to a certain position), the position in the middle of the video is namely the play start position.

Taking the user operation of dragging the slider on the video play progress bar as an example of the video play operation, in the cast that the functional option for controlling the video play progress in the video playing interface is triggered (such as tapping the fast forward button or dragging the slider on the progress bar), the terminal may determine the first start position based on the trigger situation for the functional option. For example, in the case that the slider on the progress bar for controlling the play progress of the video is dragged to the middle position of the target video, the terminal determines the first start position based on the middle position and the video segment threshold.

In some embodiments, in the determining process of the first start position of the target video based on the video segment threshold and the position acquired based on the user's dragging operation on the slider on the progress bar, the position of the slider may be within an interval corresponding to a video segment. Under this case, the terminal determines the start position or cutoff position of the interval corresponding to the video segment as the first start position. For example, taking the video segment threshold being 1Mbyte as an example, the terminal, in response to acquiring a target video of 5Mbytes, may determine that the video of 5Mbytes corresponds to five video segments (i.e., the target video is stored as five video segments or video segment files), which respectively corresponds to the 1^{st} 1Mbyte to the 5^{th} 1Mbyte, each video segment being 1Mbyte in size. In the case that the user drags the slider on the progress bar to a position between the 3^{rd} 1Mbyte and the 4^{th} 1Mbyte, such as the position corresponding to 3.5^{th} 1Mbyte, the terminal may determine that the first start position is the start position of the 3^{rd} 1Mbyte.

In some embodiments, the terminal may acquire the data volume of the target video by the following means. In the case that the user selects to play the target video, the terminal sends a request to the video server in response to the video play operation, to acquire the information of the target video, the information of the target video including the data volume of the target video. In other embodiments, the terminal first sends a download request to download video data in one video segment size (e.g., the video data of the 1^{st} 1Mbyte), and the video server may add the data volume of the target video to the video data as returned to the terminal.

In some embodiments of the present disclosure, the first start position of the target video is identified with a time parameter, a video frame number, or a position of a byte (e.g., the X^{th} byte or the Y^{th} video segment segmented by the terminal). The parameters for identifying the first start position may be converted to each other based on relevant parameters of the target video (e.g., total length, frame rate, a video data volume of a frame, or the like), and the converting algorithm is not limited in the embodiments of the present disclosure.

In S202, the terminal, based on the first start position of the target video, sends a first download request for downloading the first video data. The first video data starts from the first start position, and a data volume of the first video data does not exceed the video segment threshold.

In some embodiments, the terminal sends the first download request to the video server based on the first start position of the target video.

The data volume of the video data to be downloaded by the first download request does not exceed the video segment threshold. Because the video segment threshold is set by the terminal (e.g., the video segment threshold is defined by the video segmentation rule on the terminal), the first video data as acquired based on the first download request satisfies a requirement of the video segment threshold defined by the video segmentation rule. In other words, the first video segment with a data volume meeting the requirement of the terminal may be downloaded based on the first download request, wherein the start position of the first video segment is the first start position described above.

It should be noted that the data volume of the last video segment of the target video may be less than the video segment threshold.

In an example in which the video segment threshold is 1Mbyte and the length of the target video is 5.5Mbytes, in some scenarios, in the case that the first start position in S202 is the start position of the target video, what is downloaded by the terminal is video data of the 1^{st} 1Mbyte of the target video (i.e., the first video segment as segmented by the terminal). In other scenarios, in the case that in S202 the user drags the slider on the play progress bar to position the slider at the start position of the 3^{rd} Mbyte of the target video, the start position of the 3^{rd} Mbyte is the first start position, and the terminal downloads the 3^{rd} 1Mbyte of the target video (i.e., the third video segment as segmented by the terminal). In other scenarios, in the case that the user drags the slider in the play progress bar to position the slider at the start position of the 5^{th} Mbyte of the target video, the start position of the 5^{th} Mbyte is the first start position, and the terminal downloads 0.5Mbytes of video data (i.e., the sixth video segment as segmented by the terminal) starting from the 5^{th} Mbyte of the target video data.

In some embodiments, the first download request carries indication information of a video segment starting from the first start position of the target video. The indication information enables the video server to determine the video segment requested by the terminal, and thereby the video server may send the video segment requested by the terminal to the terminal. The method is applicable to a case where the video server may be informed of the video segmentation rule on the terminal side. In this case, the video server may determine the video segment threshold based on the video segmentation rule on the terminal side. Then, the video data at the corresponding position in the target video and meeting the video segment threshold (i.e., the data volume of the video data not exceeding the video segment threshold) is sent to the terminal based on the download request from the terminal.

In some embodiments, the indication information of a video segment in the first download request includes an index of the video segment among all video segments corresponding to the target video. For example, in an example in which the size of the video segment is 1Mbyte and the length of the target video is 5Mbytes, the target video corresponds to five video segments, with the index values being 1 to 5 respectively. In the case that a video segment requested to be downloaded by the current request is a video segment that takes the starting position of the 2^{nd} Mbyte as the first starting position, the first download request carries the index value 2 of the second video segment to indicate that the first download request is for downloading the second video segment. The index of the video segment enables the video server to acquire a corresponding video segment of the target video and thereby send the video segment to the terminal. The method is applicable to a case where the video server may be informed of the video segmentation rules on the terminal side. In this case, the video server may determine the video segment threshold based on the video segmentation rule on the terminal side. Then, the video data at the corresponding position in the target video and meeting the requirement of the video segment threshold (i.e., the data volume of the video data not exceeding the video segment threshold) is sent to the terminal based on the download request from the terminal.

In some embodiments, the indication information of the video segment in the first download request includes indication information of the first start position and video segment threshold information. For example, taking that the video segment threshold is 1Mbyte and the length of the target video is 5Mbytes as an example, in the case that a video segment requested to be downloaded by the current request is the video segment that takes the start position of the 2^{nd} Mbyte as the first start position, the first download request carries a parameter (2,1), wherein "2" means that the start position requested to be downloaded by this request is the start position of the 2^{nd} Mbyte, and " 1" means that 1Mbyte of video data should be downloaded from the position indicated by "2." Based on the indication information of the first start position and the threshold information of the video segment, the video server acquires the video data at the corresponding position of the target video based on the start position and the video segment threshold, and thus sends the video data to the terminal. The method may be applied in a case where the video segment threshold has no change, or the method may be applied in a case where the video segment threshold is updated. The video server may send the video data starting from the start position and meeting the requirement of the video segment threshold to the terminal via the video segment threshold in the download request.

In some embodiments, the indication information of the video segment in the first download request includes the indication information of the first start position and indication information of the first cutoff position. The data volume of the video data indicated by the first start position and the first cutoff position satisfies the requirement of the video segment threshold, which means that the data volume of the video data does not exceed the video segment threshold. For example, taking that the size of the video segment is 1Mbyte and the length of the target video is 5Mbytes as an example, in the case that the video segment requested to be downloaded by the current request is the video segment that takes the start position of the 2^{nd} Mbyte as the first start position, the first download request carries the parameter (2,3), wherein "2" means that the start position requested to be downloaded by this request is the start position of the 2^{nd} Mbyte, "3" means that the cutoff position requested to be downloaded by this request is the start position of the 3^{rd} Mbyte (that is, the cutoff position of the 2^{nd} Mbyte). The interval between the start position and the cutoff position corresponds to the second video segment of the target video, wherein the second video segment is 1Mbyte in size. The method is applicable for the case where the video server may be or not be informed of the video segmentation rule on the terminal side.

In some embodiments, the indication information described above for indicating the first start position and the first cutoff position is a timestamp, a video frame number, or a byte position (e.g., the n^{th} byte), which is not limited in the present disclosure. These types of parameters may be converted to each other. For example, the video frame number may be converted to a byte position based on parameters such as the playback rate, frame rate, data volume in a video frame, and the like.

Described above is only an exemplary list of indication information that may be carried in the first download request, and any indication information that enables the video server to determine, based on the first download request, the position and size of the video data to be downloaded, all falls within the protection scope of the present disclosure.

In S203, the terminal stores the first video data as a first video segment.

In some embodiments, the terminal receives the first video data from the video server, and in turn stores the first video data as the first video segment. Because the first video data starts from the first start position, the first video segment also starts from the first start position.

In this process, the first video data received by the terminal from the video server is further cached in a buffer area of a player, such that the player acquires the video data from the buffer area and plays the video data in a play window.

In this process, upon acquiring the first video segment, the terminal stores the first video segment in a compressed format to acquire a corresponding first video segment file, thereby saving the storage space.

In some embodiments of the present disclosure, in order to save network overhead, before acquiring the first video data, the terminal detects whether a video segment starting from the first start position is stored in the local storage. In the case that the video segment starting from the first start position is stored in the local storage, the terminal acquires the video segment from the local storage; and in the case that no video segment starting from the first start position is stored in the local storage, the terminal requests to acquire the first video data from the network side, the first video data starting from the first start position and having a data volume not exceeding the video segment threshold.

In some embodiments, before the process S202, the terminal may acquire, based on the first start position of the target video, a video segment that starts from the first start position and is stored in the local storage. In the case that the video segment starting from the first start position is not acquired from the local storage, the terminal sends, based on the first start position, a first download request to the video server and stores the first video data acquired based on the first download request as the first video segment; and in the case that the video segment starting from the above first start position is acquired from the local storage, the terminal plays the video segment acquired from the local storage.

For example, in an example in which one video segment is 1Mbyte and the terminal currently needs to acquire the video data of the 3^{rd} 1Mbyte of the target video (i.e. the third video segment segmented by the terminal), the terminal first determines whether a video segment file corresponding to the video segment (i.e. the file for storing the third video segment) exists in the local storage. In the case that the video segment file is stored in the local storage, the terminal loads the video segment file into a memory (e.g., the player's buffer area) for playing the video segment file. In the case that the video segment file is not stored in the local storage, the terminal sends a download request to acquire the video date of the 3^{rd} 1Mbyte of the target video (i.e. the third video segment segmented by the terminal) from the video server, and upon receiving the video date of the 3^{rd} 1Mbyte of the target video (i.e. the third video segment segmented by the terminal), the terminal catches the received video data to the buffer area of the player and then stores the received video data into the local storage to acquire a corresponding video segment file.

Upon acquiring the video segment file corresponding to the video segment starting from the first start position according to the above processes, in the case that the play end condition is not met(e.g., the user does not trigger the play end control operation or the paly of the target video is not finished), the terminal sends, based on the second start position of the target video, a second download request to the video server. The second download request herein is configured for downloading the second video data that starts from the second start position and has a data volume not exceeding the video segment threshold. The terminal receives the second video data from the video server based on the second download request and stores the second video data as a second video segment. The second video data starts from the second start position, such that the second video segment also starts from the second start position. The second start position herein is the end position of the first video segment. In this way, it is possible to continuously acquire the video data from the network side, and the data volume of video data acquired every time matches the video segment threshold, which enables to store the downloaded video data as video segment files one by one in the premise of ensuring the play of the target video.

For example, taking one video segment file being 1Mbyte as an example, in the case that after the terminal downloads the video data of the 3^{rd} 1Mbyte of the target video from the video server, the play of the target video is not finished, the terminal re-sends a download request to the video server to download the video data of the 4^{th} 1Mbyte of the target video (i.e., the fourth video segment segmented by the terminal), and then stores the fourth video segment as a video segment file upon receiving the fourth video segment. The start position in the re-sent download request is the end position of the third video segment downloaded under the previous download request, and the end position of the third video segment is also the start position of the fourth video segment. In this example, the start position of the target video requested by the previous download request is the start position of the 3^{rd} 1Mbyte and a target position is the end position of the 3^{rd} 1Mbyte. Thus, it may be determined that the video data may be acquired from the start position of the 4^{th} 1Mbyte in the case that the download request is re-sent.

In the above process, the terminal may send a video download request based on status of the buffer area of the player. For example, the second video download request is not sent temporarily in the case that the terminal sends the first download request and the occupancy rate of the buffer area of the player is 50%, which is higher than a predetermined threshold (such as a threshold of 20%). As time passes, the data in the buffer area of the player is played by the player, and the occupancy rate of the buffer area gradually decreases. Then, the second video download request is sent in the case that the occupancy rate drops to the threshold or below the threshold (such as dropping to 20% or below).

In some embodiments, before sending a second download request to the video server, the terminal may further determine whether the video segment starting from the second start position exits in the local storage based on the second start position of the target video. In the case that no video segment starting from the second start position exits in the local storage, the terminal sends the second download request to the video server based on the second start position; and in the case that the video segment starting from the second start position exits in the local storage, the terminal acquires the corresponding video segment from the local storage and then plays the video segment acquired from the local storage. The method saves the network overhead.

In some embodiments, before the play end condition is met, the video data is acquired and then played according to the above process, wherein the video data is further stored as a video segment file in the case that the video data is downloaded from the network side, until the play end condition is met.

According to the above process, taking the length of the target video being 5Mbytes as an example, in the case that the user starts to play the target video from the start position of the target video until the play is completed and triggers no operation (such as an operation of dragging the slider on the play progress bar) during the play process, the video data of the target video is stored as five video segment files according to the above process, wherein the five video segment files store the corresponding video segment 1 to video segment 5 of the target video, each video segment being 1Mbyte in size. In some embodiments, in the case that the video segment file is stored in a compressed format, one video segment file may be less than 1Mbyte in size.

Further taking the length of the target video being 5Mbytes as an example, in the case that the user starts to play the target video from the 3^{rd} Mbyte of the target video (for example, the user drags the slider on the progress bar to the position corresponding to the 3^{rd} Mbyte), the video data of the target video is stored as three video segment files according to the above process, wherein the three video segment files respectively store the third to fifth video segments of the corresponding five video segments of the target video, each video segment being 1Mbyte in size. In some embodiments, in the case that the video segment file is stored in a compressed format, one video segment file may be less than 1Mbyte in size.

According to the above process, the terminal sends, based on the play start position of the target video, a download request to the video server for downloading the video data that starts from the start position and has a data volume not exceeding the video segment threshold. Upon receiving the video data from the video server based on the download request, the terminal stores the received video data as a video segment or a video segment file, wherein the video segment or the video segment file starts from the start position. Therefore, data is downloaded from the play start position. Compared with downloading data from the start position of the target video, the network bandwidth and storage space may be saved, and the response speed may be improved, which in turn improves the play performance and provides the user with a better viewing experience.

In some embodiments of the present disclosure, the naming rule of the video segment file may be defined, such that the filename of the video segment file indicates a corresponding video and the position of the video segment within the video. The filename of a video segment file includes the indication information of the video and the position information of the video segment, and further includes indication information of the total number of the video segments.

The indication information of the video indicates the video to which the video segment file belongs. In some embodiments, a video is identified with a uniform resource locator (URL) for the video. The length of the URL is usually long. In some embodiments of the present disclosure, the URL of the video is calculated using a predetermined algorithm (such as a digest algorithm) to acquire a corresponding string with a fixed-length (the length of the string is less than the length of the URL), and the string is adopted as the indication information of the video in the filename of the video segment file. Because there is a correspondence between the string for indicating the video in the filename of the video segment file and the URL of the video, the string may be configured to identify the corresponding video. The algorithm is not limited in the embodiments of the present disclosure.

The position information of the video segment indicates the position of the video segment in the video to which the video segment belongs, such as the video segment being a corresponding n^{th} video segment of the video. In some embodiments, the position information of the video segment is represented by a position index of the video segment, wherein the position index of the video segment indicates the position of the video segment among all the video segments corresponding to the target video. For example, the position information of the video segment is represented by a numeral for indicating the serial number (i.e., index) of the video segment. For example, the position information of the video segment in the filename of a video segment file is "10_3," where "10" indicates the total number of video segments contained in the video according to the video segmentation rule of the terminal, and "3" indicates that the video segment is the third one among the ten video segments.

Furthermore, the filename of the video segment file further includes indication information of the total number of video segments corresponding to the target video, wherein the indication information of the total number of video segments corresponding to the target video may indicate the information about the total length of the video.

Various parts of a filename of a video segment file are separated by a separator (e.g., an underscore, or other similar separators). For example, a filename of a video segment file may be 1234ABCD_10_3.

"1234ABCD" is the indication information of the video, which is acquired by calculating the URL of the video using the digest algorithm, "10" indicates that the number of video segments of the video is 10, and "3" indicates that the video segment is the third one among the ten segments of the video.

In some other embodiments, the storage structure and the naming rule of the video segment file are defined, such that the storage structure and the naming rule of the video segment file indicate the corresponding video and the position of the video segment in the video. For example, video segment files of one same video are stored in a corresponding folder, and video segment files from different videos are stored in different folders. A name of the folder includes the indication information of the video (the indication information corresponds to the URL of the video. In some embodiments, the indication information is calculated according to the fashion described in the previous embodiments), and the filename of the video segment file of the video also includes the position information of the video segment.

In some embodiments, the segmentation rule for the video may need to be updated, for example, the value of the video segment threshold needs to be updated, which means that the data volume of the video data contained in one video segment needs to be updated. Accordingly, the filename of the video segment file further includes version information, wherein the version information identifies a corresponding video segmentation rule or video segment threshold. The video segmentation rule indicates the data volume of the video segment. For example, the video segment threshold is 1Mbyte under the video segmentation rule corresponding to the version number v1, and the video segment threshold is 2Mbytes under the video segmentation rule corresponding to the version number v2.

In some embodiments, in the case that the video segmentation rule (e.g., video segment threshold) indicated by the version information in the filename of the acquired video segment file corresponding to the corresponding position of the target video is different from the current video segmentation rule (e.g., video segment threshold), the terminal acquires, based on the start position of the target video and the current video segmentation rule (e.g., video segment threshold), the video data meeting the requirements of the current video segmentation rule (e.g., video segment threshold) from the video server, then stores the received video data to acquire corresponding video segment, and then plays the acquired video data. The data volume of each video segment does not exceed the current video segment threshold, and when storing the video segment file, the version information in the filename of the video segment file is the version information corresponding to the current video segmentation rule (e.g., video segment threshold). In some embodiments, the current video segment threshold is indicated in the download request.

In some embodiments of the present disclosure, the video segment file is stored in the local file system of the terminal. For example, the video segment file is stored into a non-volatile storage medium (e.g., disk).

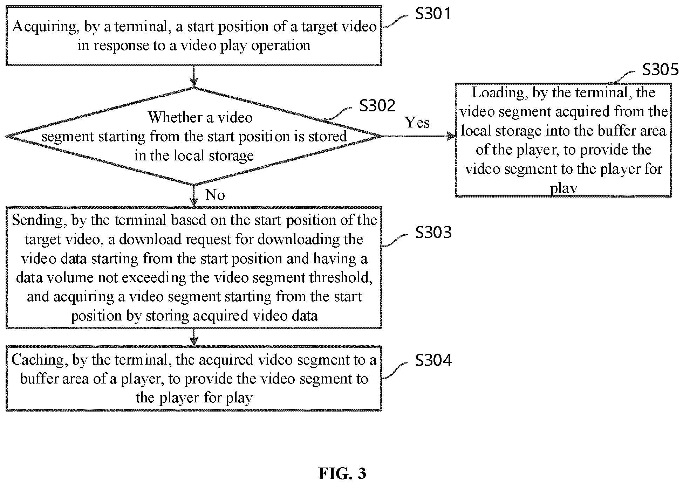

In some other embodiments of the present disclosure, an implementing process in an application scenario is illustrated based on the process shown in FIG. 2. As shown in FIG. 3, the following processes are included.

In S301, the terminal acquires the start position of the target video in response to the video play operation.

For details of this process, reference may be made to the above embodiments, which are not repeated herein.

In S302, the terminal inquires, based on the start position of the target video, whether a video segment starting from the start position is stored in the local storage, and S303 is performed in the case that the video segment starting from the start position is not stored in the local storage, otherwise, S305 is performed.

In the case that no video segment starting from the start position is stored in the local storage, the terminal fails to acquire the corresponding video segment from the local storage. The reason why the terminal fails to acquire the corresponding video segment in the local storage may be that the target video is played for the first time, or the target video is played previously, but the stored video segment of the target video is erased upon a long time interval.

In some embodiments, in the case that a corresponding video segment is stored in the local storage but the video segment threshold indicated by the version information of the video segment is different from the current video segment threshold, S303 is performed to re-download the target video data, such that the target video is segmented based on the current video segment threshold.

In some embodiments, the video segment file corresponding to the target video is inquired in this process based on the name of the video segment file, and the video segment corresponding to the video segment file is determined. For example, taking that the target video is 5Mbytes and one video segment file is 1Mbyte as an example, the terminal currently needs to acquire the third video segment of the target video. However, only two video segment files corresponding to the target video are stored in the local storage. The filename of one segment file includes "5 4" (indicating the fourth video segment of the five video segment files), and the filename of the other video segment file includes "5 5" (indicating the fifth video segment of the five video segment files). Under this case, the terminal determines, based on the filenames of the two video segment files, that the local storage merely stores the fourth and fifth video segments and does not store the third video segment of the target video. Therefore, the terminal acquires the third video segment of the target video from the video server.

In S303, the terminal sends, based on the start position of the target video, a download request for downloading the video data starting from the start position and having a data volume not exceeding the video segment threshold, and acquires the video segment starting from the start position by storing the acquired video data.

For details of this process, reference may be made to the above embodiments, which are not repeated herein.

In S304, the terminal caches the acquired video segment to the buffer area of the player, to provide the video segment to the player for play.

In S305, the terminal loads the video segment acquired from the local storage into the buffer area of the player, to provide the video segment to the player for play.

Based on the same inventive concept, embodiments of the present disclosure further provide a terminal that implements the video acquiring process as defined in the above embodiments.

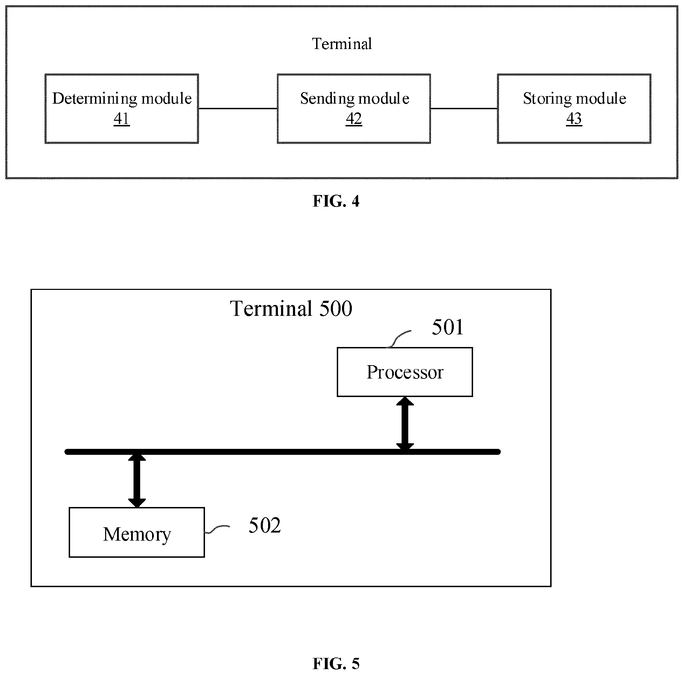

As shown in FIG. 4, the terminal includes a position determining module 41, a download requesting module 42, and a storing module 43.

The determining module 41 is configured to determine a first start position of a target video in response to a video play operation.

The sending module 42 is configured to send a first download request for downloading first video data. The first video data starts from the first start position and a data volume of the first video data does not exceed the video segment threshold.

The storing module 43 is configured to store the first video data as a first video segment.

In some embodiments, the determining module 41 is configured to acquire a play start position of the target video in response to the video play operation, and determine the first start position of the target video based on the play start position and the video segment threshold.

In some embodiments, the sending module 42 is configured to send the first download request in the case that no video segment starting from the first start position is stored in the local storage.

In some embodiments, the sending module 42 is further configured to send a second download request for downloading second video data in the case that a play end condition is not met. The second video data starts from a second start position, and a data volume of the second video data does not exceed the video segment threshold, the second start position being an end position of the first video segment. The storing module 43 is further configured to store the second video data as a second video segment.

In some embodiments, the sending module 42 is configured to send the second download request in the case that no video segment starting from the second start position is stored in the local storage.

In some embodiments, the video segment threshold is determined by any one of:
determining the video segment threshold by the terminal based on the data volume of the target video;
determining the video segment threshold by the terminal based on the storage space information of the local storage; and
determining the video segment threshold by the terminal based on the data volume of the target video and the storage space information of the local storage.

In some embodiments, the filename of the video segment file includes:
indication information of the target video; and
a position index of the video segment, indicating a position of the video segment among all video segments corresponding to the target video.

In some embodiments, the filename of the video segment file further includes indication information of the total number of video segments corresponding to the target video.

In some embodiments, the filename of the video segment file further includes version information for identifying a corresponding video segmentation rule, wherein the video segmentation rule indicates the data volume of a video segment.

Regarding the terminal shown in FIG. 4, for details of operations performed by each component and the functions achieved by various components, reference may be made to related description about the video acquiring process provided in the above embodiments, which are not described in detail herein.

Based on the same technical concept, embodiments of the present disclosure further provide a terminal.

FIG. 5 is a block diagram of a terminal 500 according to an exemplary embodiment. The terminal includes a processor 501, and a memory 502 configured to store one or more instructions executable by the processor 501. The processor 501, when loading and executing the one or more instructions, is caused to perform any method for acquiring videos as defined in the embodiments of the present disclosure.

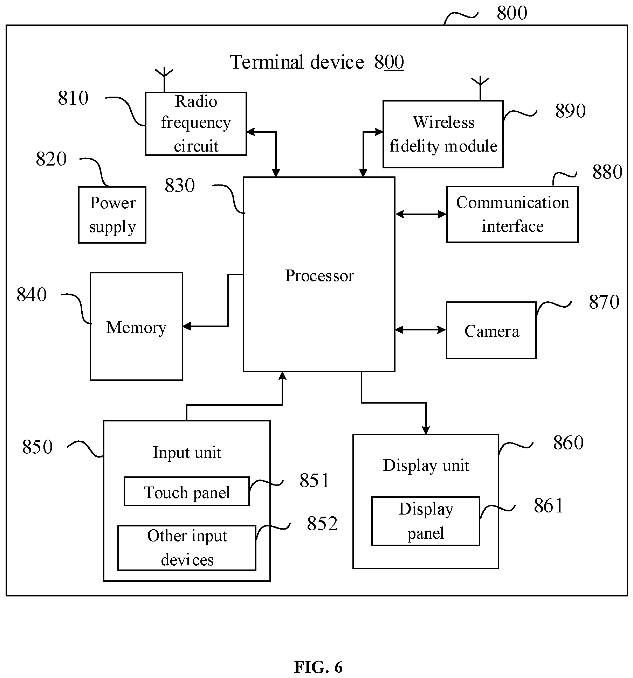

Embodiments of the present disclosure further provide a terminal having a structure as shown in FIG. 6. Embodiments of the present disclosure provide a terminal device 800, which includes a radio frequency (RF) circuit 810, a power supply 820, a processor 830, a memory 840, an input unit 850, a display unit 860, a camera 870, a communication interface 880, and a wireless fidelity (Wi-Fi) module 890, and other components. Those skilled in the art may understand that the structure of the terminal shown in FIG. 6 does not constitute a limitation to the terminal, and in some embodiments, the terminal in some embodiments of the present disclosure includes more or fewer components than those as shown, or includes a combination of some components, or has a different arrangement of components.

The various components of the terminal device 800 are specifically described hereinafter in conjunction with FIG. 6.

The RF circuit 810 is configured to receive and send data during the communication or conversation process. In some embodiments, upon receiving downlink data from a base station, the RF circuit 810 sends the downlink data to the processor 830 for processing, and the RF circuit 810 sends uplink data to be transmitted to the base station. Typically, the RF circuit 810 includes, but is not limited to, an antenna, at least one amplifier, a transceiver, a coupler, a low noise amplifier (LNA), a duplexer, and the like.

In addition, the RF circuit 810 may also communicate with a network and other terminals via wireless communication. The wireless communication may adopt any communication standard or protocol, including, but not limited to, the global system of mobile communication (GSM), the general packet radio service (GPRS), the code division multiple access (CDMA), the wideband code division multiple access (WCDMA), the long-term evolution (LTE), the e-mail, the short messaging service (SMS), and the like.

The Wi-Fi technology is a short-range wireless transmission technology, and the terminal device 800 may be connected to an access point (AP) via the Wi-Fi module 890, thereby accessing the data network. The Wi-Fi module 890 may be configured to receive and transmit the data during the communication process.

The terminal device 800 may be physically connected to other terminals via the communication interface 880. In some embodiments, the communication interface 880 is connected to communication interfaces of other terminals via cables, to allow the data transmission between the terminal device 800 and other terminals.

In the embodiments of the present disclosure, the terminal device 800 may request to watch live video streaming and acquire the live streaming data from the network side by interacting with the network side, such that the terminal device 800 has a data transmission function, which means that the terminal device 800 includes a communication module therein. Although FIG. 6 shows the communication modules such as the RF circuit 810, the Wi-Fi module 890, and the communication interface 880, it may be understood that merely at least one of the above components or other communication modules (e.g., a Bluetooth module) for communication are included in the terminal device 800 to enable the data transmission.

For example, in the case that the terminal device 800 is a cell phone, the terminal device 800 includes the RF circuitry 810 and the Wi-Fi module 890; in the case that the terminal device 800 is a computer, the terminal device 800 includes the communication interface 880 and the Wi-Fi module 890; and in the case that the terminal device 800 is a tablet, the terminal device 800 includes the Wi-Fi module.

The memory 840 may be configured to store the software programs and modules. The processor 830, when running the software programs and modules stored in the memory 840, is caused to run various functional applications of the terminal device 800 and perform data processing. The processor 830, when executing program codes in the memory 840, is capable of performing some or all of the processes in FIG. 2 or FIG. 3 according to embodiments of the present disclosure.

In some embodiments, the memory 840 mainly includes a program storing area and a data storing area. The program storing area herein may store an operating system, various applications (e.g., communication applications), face recognition modules, and the like; and the data storing area may store data created based on the use of the terminal (e.g., various multimedia files such as pictures and video files, and face information templates), and the like.

In addition, the memory 840 includes a high-speed random access memory and also a non-volatile memory, such as at least one disk storage device, flash memory device, or other volatile solid-state memory devices.

The input unit 850 may be configured to receive figure or character information entered by the user, and generate key signal inputs related to the user setting and functional control of the terminal device 800.

In some embodiments, the input unit 850 includes a touch panel 851 and other input terminals 852.

The touch panel 851, also known as a touch screen, is capable of collecting touch operations of the user on or near the touch panel (e.g., the user operations on or near the touch panel 851 by any suitable object or accessory such as a finger, stylus, etc.) and driving the corresponding connecting device based on a predetermined program. In some embodiments, the touch panel 851 includes two portions, i.e., a touch detection device and a touch controller. The touch detection device detects the user's touch orientation, detects the signal caused by the touch operation, and sends the signal to the touch controller; and the touch controller receives the touch information from the touch detection device, converts the touch information into coordinates of a touch point, sends the coordinates of a touch point to the processor 830, and also receives and executes the commands from the processor 830. In addition, in some embodiments, the touch panel 851 may be implemented with various types, such as the resistive, capacitive, infrared, and surface acoustic wave types.

In some embodiments, other input terminals 852 include, but are not limited to, one or more of a physical keyboard, a function key (e.g., a volume control button, a switch button, etc.), a trackball, a mouse, a joystick, and the like.

The display unit 860 may be configured to display the information entered by the user, information provided to the user, and various menus of the terminal device 800. The display unit 860 is the display system of the terminal device 800 and is configured to present the interface for human-computer interaction.

The display unit 860 includes a display panel 861. In some embodiments, the display panel 861 is realized by a liquid crystal display (LCD), an organic light-emitting diode (OLED), and the like.

Furthermore, the touch panel 851 may cover the display panel 861, and in the case that the touch panel 851 detects a touch operation on or near the touch panel, the touch operation may be transmitted to the processor 830 to determine the type of touch event. Subsequently, the processor 830 provides a corresponding visual output on the display panel 861 based on the type of the touch event.

Although in FIG. 6, the touch panel 851 and the display panel 861 serve as two separate components to implement the input and input functions of the terminal device 800, the touch panel 851 may be integrated with the display panel 861 in some embodiments to implement the input and output functions of the terminal device 800.

The processor 830 is a control center of the terminal device 800, connects to various components via respective interfaces and lines, performs various functions of the terminal device 800, and processes data by running or executing software programs and/or modules stored in the memory 840 and calling the data stored in the memory 840, thereby realizing a variety of terminal-based services.

In some embodiments, the processor 830 includes one or more processing units. In some embodiments, the processor 830 may integrate an application processor and a modem processor. The application processor primarily handles the operating system, the user interface, the application, and the like, and the modem processor primarily handles wireless communications. It may be understood that the modem processor is not integrated into the processor 830 in some other embodiments.

The camera 870 is configured to implement the shooting function of the terminal device 800, to take pictures or videos. The camera 870 is further configured to implement the scanning function of the terminal device 800 to scan a scanning object (Quick Response code/barcode).

The terminal device 800 further includes a power supply 820 (e.g., a battery) for powering the various components. In some embodiments, the power supply 820 may be logically connected to the processor 830 via a power management system, thereby implementing the functions of managing the charging, discharging, power consumption, and the like via the power management system.

It should be noted that the processor 830 in the embodiments of the present disclosure may achieve the functions of the processor 501 of FIG. 5, and the memory 840 stores the contents of the memory 502.

Exemplary embodiments of the present disclosure further provide a computer-readable storage medium including one or more instructions. The one or more instructions, when loaded and executed by the processor 501 of the terminal 500, cause the terminal to accomplish the above method. In some embodiments, the computer-readable storage medium is a non-transitory computer-readable storage medium. For example, the non-transitory computer-readable storage medium may be a read-only memory (ROM), a random-access memory (RAM), a compact disc read-only memory (CD-ROM), a magnetic tape, a floppy disk, an optical data storage device, or the like.

Embodiments of the present disclosure further provide a computer program product. The computer program product, when run on the terminal, causes the terminal to perform the method for acquiring videos as defined in any one of the above embodiments of the present disclosure or a related method.

All embodiments of the present disclosure may be performed alone or in combination with other embodiments, and are considered to be within the protection scope claimed by the present disclosure.

## Claims

1. A method for acquiring videos, comprising:
determining a first start position of a target video in response to a video play operation;
sending a first download request for downloading first video data, wherein the first video data starts from the first start position, and a data volume of the first video data does not exceed a video segment threshold; and
storing the first video data as a first video segment.

2. The method according to claim 1, wherein said determining the first start position of the target video in response to the video play operation comprises:
acquiring a play start position of the target video in response to the video play operation, and determining the first start position based on the play start position and the video segment threshold.

3. The method according to claim 1, wherein said sending the first download request comprises:
sending the first download request in the case that no video segment starting from the first start position is stored in local storage.

4. The method according to claim 1, further comprising:
sending a second download request for downloading second video data in the case that a play end condition is not met, wherein the second video data starts from a second start position, and a data volume of the second video data does not exceed the video segment threshold, the second start position being an end position of the first video segment; and
storing the second video data as a second video segment.

5. The method according to claim 4, wherein said sending the second download request comprises:
sending the second download request in the case that no video segment starting from the second start position is stored in local storage.

6. The method according to any one of claims 1 to 5, wherein the video segment threshold is determined by any one of:
determining the video segment threshold by a terminal based on a data volume of the target video;
determining the video segment threshold by the terminal based on storage space information of local storage; and
determining the video segment threshold by the terminal based on the data volume of the target video and the storage space information of the local storage.

7. A terminal, comprising:
a determining module, configured to determine a first start position of a target video in response to a video play operation;
a sending module, configured to send a first download request for downloading first video data, wherein the first video data starts from the first start position, and a data volume of the first video data does not exceed a video segment threshold; and
a storing module, configured to store the first video data as a first video segment.

8. The terminal according to claim 7, wherein the determining module is configured to:
acquire a play start position of the target video in response to the video play operation, and determine the first start position based on the play start position and the video segment threshold.

9. The terminal according to claim 7, wherein the sending module is configured to:
send the first download request in the case that no video segment starting from the first start position is stored in local storage.

10. The terminal according to claim 7, wherein
the sending module is further configured to send a second download request for downloading second video data in the case that a play end condition is not met, wherein the second video data starts from a second start position, and a data volume of the second video data does not exceed the video segment threshold, the second start position being an end position of the first video segment; and
the storing module is further configured to store the second video data as a second video segment.

11. The terminal according to claim 10, wherein the sending module is configured to send the second download request in the case that no video segment starting from the second start position is stored in local storage.

12. The terminal according to any one of claims 7 to 11, wherein the video segment threshold is determined by any one of:
determining the video segment threshold by the terminal based on a data volume of the target video;
determining the video segment threshold by the terminal based on storage space information of local storage; and
determining the video segment threshold by the terminal based on the data volume of the target video and the storage space information of the local storage.

13. A terminal, comprising:
a processor;
a memory configured to store one or more instructions executable by the processor;
wherein the processor, when loading and executing the one or more instructions, is caused to:
determine a first start position of a target video in response to a video play operation;
send a first download request for downloading first video data, wherein the first video data starts from the first start position, and a data volume of the first video data does not exceed a video segment threshold; and
store the first video data as a first video segment.

14. The terminal according to claim 13, wherein the processor, when loading and executing the one or more instructions, is caused to:
acquire a play start position of the target video in response to the video play operation, and determine the first start position based on the play start position and the video segment threshold.

15. The terminal according to claim 13, wherein the processor, when loading and executing the one or more instructions, is caused to:
send the first download request in the case that no video segment starting from the first start position is stored in local storage.

16. The terminal according to claim 13, wherein the processor, when loading and executing the one or more instructions, is caused to:
send a second download request for downloading second video data in the case that a play end condition is not met, wherein the second video data starts from a second start position, and a data volume of the second video data does not exceed the video segment threshold, the second start position being an end position of the first video segment; and
store the second video data as a second video segment.

17. The terminal according to claim 16, wherein the processor, when loading and executing the one or more instructions, is caused to:
send the second download request in the case that no video segment starting from the second start position is stored in local storage.

18. The terminal according to any one of claims 13 to 16, wherein the processor, when loading and executing the one or more instructions, is caused to determine the video segment threshold;
wherein the video segment threshold is determined by any one of:
determining the video segment threshold by the terminal based on a data volume of the target video;
determining the video segment threshold by the terminal based on storage space information of local storage; and
determining the video segment threshold by the terminal based on the data volume of the target video and the storage space information of the local storage.

19. A computer-readable storage medium storing one or more instructions, wherein the one or more instructions, when loaded and executed by a processor of a terminal, cause the terminal to:
determine a first start position of a target video in response to a video play operation;
send a first download request for downloading first video data, wherein the first video data starts from the first start position, and a data volume of the first video data does not exceed a video segment threshold; and
store the first video data as a first video segment.

20. A computer program product, wherein the computer program product, when run on a terminal, causes the terminal to:
determine a first start position of a target video in response to a video play operation;
send a first download request for downloading first video data, wherein the first video data starts from the first start position, and a data volume of the first video data does not exceed a video segment threshold; and
store the first video data as a first video segment.
